Europäisches Patentamt

(19) European Patent Office

Office européen des brevets

(11) Veröffentlichungsnummer: **0 032 538**
**B1**

(12) **EUROPÄISCHE PATENTSCHRIFT**

(45) Veröffentlichungstag der Patentschrift:
25.01.84

(51) Int. Cl.³: **B 01 D 19/04**

(21) Anmeldenummer: **80107090.5**

(22) Anmeldetag: **15.11.80**

(54) **Verfahren zur Herstellung von sedimentationsstabilen Schaumbekämpfungsmitteln.**

(30) Priorität: **17.01.80 DE 3001573**

(43) Veröffentlichungstag der Anmeldung:
**29.07.81 Patentblatt 81/30**

(45) Bekanntmachung des Hinweises auf die Patenterteilung:
**25.01.84 Patentblatt 84/4**

(84) Benannte Vertragsstaaten:
**AT BE CH DE FR GB IT LI NL**

(56) Entgegenhaltungen:
**EP - A - 0 023 533**
**DE - A - 1 544 001**
**DE - A - 2 443 853**
**DE - B - 1 239 276**
**FR - A - 1 577 613**
**FR - A - 2 399 858**
**US - A - 3 250 727**
**US - A - 4 008 173**

**CHEMICAL ABSTRACTS, Band 85, 1976, Seite 73,**
**Zusammenfassung 6968y, COLUMBUS, OHIO (US)**

(73) Patentinhaber: **Degussa Aktiengesellschaft,**
**Weissfrauenstrasse 9, D-6000 Frankfurt am Main 1 (DE)**

(72) Erfinder: **Müller, Karl-Hans, Dr., Robert-Koch-Strasse 17,**
**D-6454 Bruchköbel (DE)**
Erfinder: **Tailfer, Roland, Voie de Sedan 256,**
**B-6818 Muno (BE)**
Erfinder: **Türk, Günter, Dr., Liesingstrasse 3,**
**D-6450 Hanau 9 (DE)**

Verfahren zur Herstellung von sedimentationsstabilen Schaumbekämpfungsmitteln

Die Erfindung betrifft ein Verfahren zur Herstellung von sedimentationsstabilen Schaumbekämpfungsmitteln für wässerige Systeme mit langanhaltender Wirkung.

Aus der US-A Nr. 3113930 ist es bekannt, zur Herstellung eines Antischaummittels einen feinverteilten Füllstoff, wie Siliciumdioxid, mit einem vielfachen Überschuss an einem flüssigen Dimethylpolysiloxan auf über 350° C zu erhitzen und unter Verwendung eines speziellen Emulgators mit Wasser zu emulgieren.

Aus der DE-C Nr. 1769940 ist es bekannt, Schaumbekämpfungsmittel für wässerig-alkalische Flüssigkeiten herzustellen, indem man ein Gemisch von mindestens 70 Gew.-% eines Organosiloxanpolymeren mit einer Viskosität von etwa 5 bis etwa 100 000 cSt (0,000005 bis 0,1 m²/s), gemessen bei 25°C, sowie mindestens 0,5 Gew.-% eines feinverteilten anorganischen Füllstoffes, wie z.B. Siliciumdioxid, und 0,01 bis 1 Gew.-% eines basischen Katalysators auf Temperaturen zwischen 100 und 300° C erhitzt.

Die FR-A Nr. 2399858 beschreibt ein Verfahren zur Herstellung eines Entschäumers für wässerige Systeme. Dieser Entschäumer besteht aus drei Komponenten:

1. einem Entschäumeröl, welches unlöslich in Wasser ist,
2. einem Emulgator, und
3. einer Mischung, bestehend aus hydrophober und hydrophiler Kieselsäure (Oberfläche nach BET >50, insbesondere >150 m²/g).

Die US-A Nr. 3250727 beschreibt eine wässerige Entschäumeremulsion, die neben einem Siliconöl und pyrogener Kieselsäure einen Emulgator enthält. Bei der Herstellung dieses Antischaummittels wird die Mischung homogenisiert.

Gegenstand der Erfindung ist ein Verfahren zur Herstellung von sedimentationsstabilen Schaumbekämpfungsmitteln für wässerige Systeme durch Vermischen von 80 bis 99,5 Teilen eines Dimethylpolysiloxanöls mit einer Viskosität bei 25° C von 20 bis 1 000 000 cSt (0,00002 bis 1 m²/s) mit 20 bis 0,5 Teilen einer gefällten, unter Zusatz von mit Alkalilösung strahlvermahlenen Kieselsäure mit folgenden physikalisch-chemischen Kenndaten:

Oberfläche nach BET (DIN 66131) m²/g 160 ± 30; Teilchengrössenverteilungsbereich (Coulter Counter; 50-µm-Zelle; die Dispergierung der 0,05-g-Probe in 100 ml Elektrolytlösung erfolgt durch 10minütiges Rühren mit einem Flügelrührer bei 1000 tr/min, die Teilchen über 28 µm wurden abgesiebt).

| Teilchengrössenverteilung (µm) | Rückstand (Gew.-%) | |
|---|---|---|
| | von | bis |
| 18,35 | 0,0 | 0,0 |
| 15,14 | 0,0 | 0,0 |
| 12,50 | 0,0 | 0,0 |

| Particle size distribution (µm) | Residue (% by weight) | |
|---|---|---|
| | from | to |
| 10,30 | 0,7 | 0,95 |
| 8,50 | 0,7 | 0,95 |
| 7,00 | 1,14 | 1,55 |
| 5,80 | 1,27 | 1,72 |
| 4,80 | 3,30 | 4,47 |
| 3,95 | 5,32 | 7,20 |
| 3,26 | 8,16 | 11,05 |
| 2,69 | 13,43 | 18,17 |
| 2,22 | 16,32 | 22,09 |
| 1,83 | 24,46 | 33,09 |
| 1,51 | 32,57 | 44,07 |
| 1,25 | 42,60 | 57,63 |
| 1,03 | 59,90 | 81,00 |

Trocknungsverlust 2 h bei 105° C (DIN 55921) Gew.-% 6 ± 3
Glühverlust* 2 h bei 1000° C (DIN 55921) Gew.-% 5 ± 2
pH-Wert in 5%iger wässeriger Dispersion (DIN 53200) 8 bis 10
$SiO_2$-Gehalt** Gew.-% >90

\* bezogen auf die 2 h bei 105° C getrocknete Substanz
\*\* bezogen auf die 2 h bei 1000° C geglühte Substanz

Homogenisieren mittels eines Homogenisators sowie anschliessender Erhitzung des so erhaltenen Gemisches auf eine Temperatur von 25 bis 380° C und Halten der Temperatur während eines Zeitraums von 0,1 bis 10 h.

Gemäss der Erfindung setzt man der Kieselsäure bei der Strahlvermahlung Alkalilösung zu. Der pH-Wert der Kieselsäure kann dabei auf einen Wert von 8 bis 10, insbesondere von 8,3 eingestellt werden.

Die Strahlvermahlung der Kieselsäure kann beispielsweise derart erfolgen, wie sie in der DE-C Nr. 1293138, Beispiel 3 beschrieben wird.

In einer weiteren Ausführungsform der Erfindung kann man ein Dimethylpolysiloxanöl verwenden, welches eine Viskosität bei 25° C von 100 bis 10 000 cSt (0,0001 bis 0,01 m²/s) aufweist. In einer bevorzugten Ausführungsform kann die Viskosität 350 cSt (0,00035 m²/s) (gemessen bei 25° C) betragen.

Durch die gezielte Einstellung des pH-Wertes an der Kieselsäureoberfläche läuft die Hydrophobierungsreaktion gezielt und überschaubar ab. Gegenüber der getrennten Einarbeitung von Kieselsäure und Alkali entsteht ein Entschäumersystem mit gesteigerter Aktivität. Durch die Fixierung des Alkalis an der Oberfläche der schwach alkalisch eingestellten Kieselsäure ist die Gewährleistung gegeben, dass das Alkali an den aktiven Zentren, an denen die Reaktion mit dem Siliconöl eintritt, auch lokal verfügbar ist.

Bei der getrennten Zugabe von Alkali zu der flüssigen Reaktionsmischung kann, besonders bei hohen Temperaturen, eine vorzeitige hydrolytische Spaltung des Siliconöls eintreten, wobei undefinierte Spaltprodukte entstehen. Dies macht sich zum Teil durch eine Verfärbung des flüssigen Mediums bemerkbar.

Das erfindungsgemässe Verfahren stellt insofern eine Vereinfachung dar, als man anstelle von drei Reaktionspartnern die chemische Umsetzung auf zwei Reaktionskomponenten einschränkt.

Das erfindungsgemäss erhaltene Schaumbekämpfungsmittel weist aufgrund der intensiven Homogenisierung eine überraschend hohe Lagerstabilität (verringerte Sedimentation) auf.

Das erfindungsgemäss hergestellte sedimentationsstabile Schaumbekämpfungsmittel kann in der Pharmazie, bei der Herstellung stark schäumender Latexemulsionen, in der Lebensmittelbranche, in Waschmittelformulierungen, in der Textilindustrie sowie in der Farben- und Lackindustrie verwendet werden.

Das erfindungsgemässe Verfahren wird anhand der folgenden Beispiele näher erläutert und beschrieben:

6 g der gefällten Kieselsäure (die genaue Charakterisierung ist weiter unten angegeben) werden mit 94 g Dimethylpolysiloxan DC 200 Fluid®, 350 cSt (0,00035 m²/s) der Firma Dow Corning (die genaue Charakterisierung ist weiter unten angegeben) vermischt. Anschliessend wird diese Mischung durch die ALM-Maschine, Düse 006 homogenisiert. Die daraus resultierende Dispersion wird erhitzt und bei der gewünschten Temperatur jeweils 2 h lang gehalten.

Nach der Abkühlung werden die Dispersionen 6 Wochen gelagert.

Während der Lagerzeit tritt bei der auf 300° C erhitzten Dispersion überraschend keine Sedimentation ein.

Die Tabelle 1 zeigt das unterschiedliche Sedimentationsverhalten des erfindungsgemässen Schaumbekämpfungsmittels je nach Herstellungstemperatur:

*Tabelle 1*

| Herstell-<br>temperatur<br>(°C) | Bodensatz, Menge und<br>Beschaffenheit |
|---|---|
| 100<br>200<br>300 | 6,6% fast harter Teig<br>3,3% harter Teig<br>kein Sediment festgestellt |

*Entschäumungswirksamkeit:*

*Schütteltest:*

100 ml einer 5%igen Hostapon-T-Lösung (die genaue Charakterisierung ist weiter unten angegeben) werden in einen 250-ml-Schüttelzylinder eingefüllt. Der Zylinder wird verstopft und in ein Umstülpgerät eingespannt. Es wird zehnmal umgestülpt, um Schaum zu bilden. Die entsprechende Schaummenge und das Lösungsvolumen werden abgelesen. 10 μl Entschäumer werden mit 5 μl einer 10%igen Hostapon-T-Lösung zugegeben. Die Hostapon-T-Lösung ist sehr viskos und dient dazu, die Entschäumermenge vollständig aus der Spitze herauszutragen. Der Mischzylinder wird wieder verstopft und zehnmal umgestülpt. Die Schaummenge wird dann abgelesen. Die Messung wird noch neunmal wiederholt.

Die Ergebnisse der Schütteltests sind in der Tabelle 2 zusammengestellt:

*Tabelle 2*

| Herstelltemperatur<br>(°C) | Schaumhöhe (mm) | | | | | | | | | | |
|---|---|---|---|---|---|---|---|---|---|---|---|
| | 0 | 1 | 2· | 3 | 4 | 5 | 6 | 7 | 8 | 9 | 10 |
| 100 | 200 | 110 | 112 | 112 | 112 | 110 | 110 | 110 | 108 | 108 | 108 |
| 200 | 200 | 106 | 106 | 106 | 106 | 106 | 106 | 106 | 106 | 106 | 106 |
| 300 | 200 | 106 | 106 | 106 | 106 | 106 | 106 | 106 | 106 | 106 | 106 |

*Latextest:*

50 g Primal AC 25® (die genaue Charakterisierung wird weiter unten angegeben) werden mit 50 g Wasser und 0,2 ml Entschäumer in dem HBB-Gerät (die genaue Charakterisierung wird weiter unten angegeben) aufgeschäumt.

Danach wird das Gewicht von 100 ml Prüflösung ermittelt.

Die Erbegnisse sind in der Tabelle 3 zusammengestellt:

*Tabelle →*

Die verwendete Kieselsäure ist eine gefällte, strahlvermahlene Kieselsäure und weist die folgenden physikalischchemischen Kenndaten auf:

*Tabelle 3*
*Latexentschäumungstest*

| Herstelltemperatur<br>(°C) | Mittelwert<br>(g) |
|---|---|
| 100<br>200<br>300 | 67,99<br>72,12<br>72,95 |
| Siliconöl ohne Kieselsäure | 43,45 |

Oberfläche nach BET (DIN 66131)    m²/g 160
Teilchengrössenverteilungskurve
   der Sekundärteilchen gemäss Tabelle 4
   (Coulter Counter)
Trocknungsverlust 2 h bei 105° C
   (DIN 55921)          Gew.-%   6
Glühverlust* 2 h bei 1000° C
   (DIN 55921)          Gew.-%   5
pH-Wert in 5%iger wässeriger
   Dispersion (DIN 53200)       8,3
$SiO_2$-Gehalt**           Gew.-% 98

  * bezogen auf die 2 h bei 105° C getrocknete Substanz
 ** bezogen auf die 2 h bei 1000° C geglühte Substanz

### Tabelle 4
### Teilchengrössenverteilung (Coulter Counter)
### 50-µm-Zelle

| Korngrösse (µm) | Rückstand (Gew.-%) |
|---|---|
| 18,35 | 0,00 |
| 15,14 | 0,00 |
| 12,50 | 0,00 |
| 10,30 | 0,83 |
| 8,50 | 0,83 |
| 7,00 | 1,35 |
| 5,80 | 1,50 |
| 4,80 | 3,89 |
| 3,95 | 6,26 |
| 3,26 | 9,61 |
| 2,69 | 15,80 |
| 2,22 | 19,21 |
| 1,83 | 28,78 |
| 1,51 | 38,32 |
| 1,25 | 50,12 |
| 1,03 | 70,43 |

Die Dispergierung der 0,05-g-Probe in 100 ml Elektrolytlösung erfolgt durch 10minütiges Rühren mit einem Flügelrührer bei 1000 tr/min. Die Teilchen über 28 µm wurden abgesiebt.

Das verwendete Polydimethylsiloxan DC 200 Fluid® der Firma Dow Corning ist ein Dimethylsiloxanpolymer mit einer Viskosität zwischen 0,65 bis 100 000 cSt (0,00000065 bis 0,1 m²/s), vorzugsweise von 350 cSt (0,00035 m²/s) (gemessen bei 25° C).

Die verwendete Hostapon-T-Lösung ist ein nichtionogenes Netzmittel. Hersteller ist die Firma Hoechst. Das Netzmittel besteht aus Fettsäuremethyltauridnatriumsalz (überwiegend Ölsäure) und wird wie folgt gekennzeichnet:

   Aktive Substanz: ca. 63%
   Freie Fettsäuren: maximal 2%
   NaCl: 28%
   Wasser: maximal 1%

Der verwendete Latex Primal AC 25® ist eine Acrylatemulsion mit den folgenden Eigenschaften:

Festkörpergehalt     Gew.-% 46 bis 47
pH-Wert              9,0 bis 9,5

Gewicht/U.S. gallon lbs.    8,8 bis 8,9
                       (1054-1066 g/l)
Schüttgewicht
(trocken)/U.S. gallon lbs.    0,103 (12,34 g/l)

Das verwendete HBB-Gerät (Hamilton-Beach-Blendor)" der Firma Hamilton Beach Division, Scovill Washington D.C. (USA) ist ein handelsübliches Rührgerät mit einer Drehzahl von 18 000 tr/min.

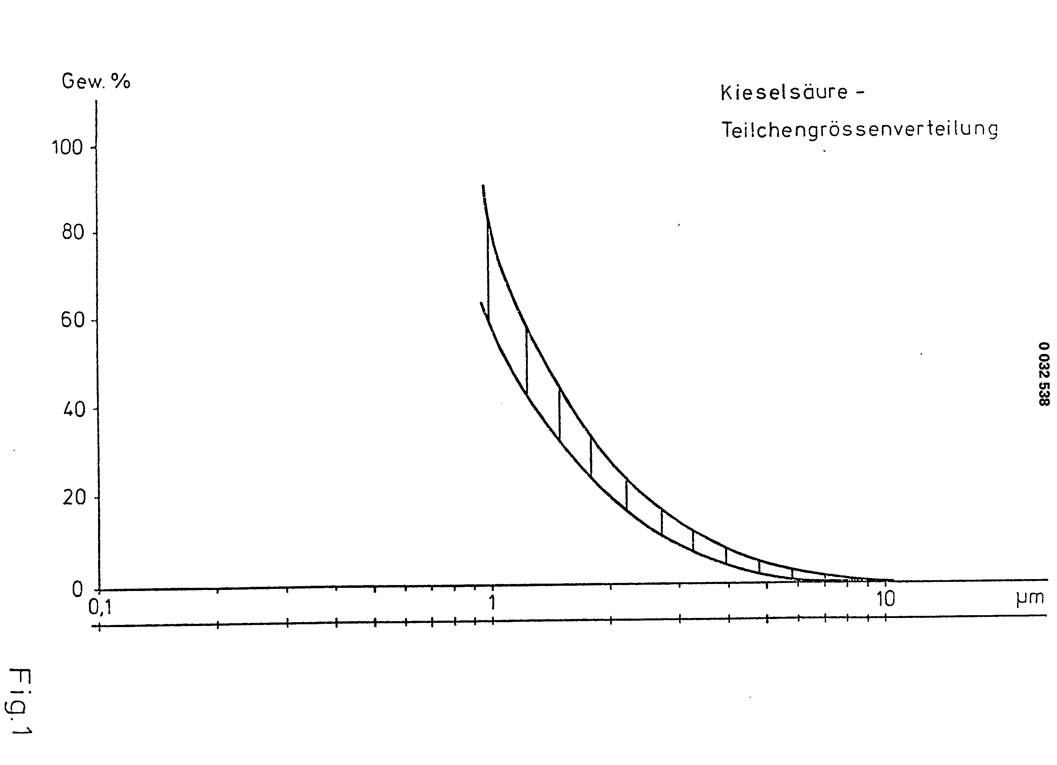

Die der Teilchengrössenverteilungskurve der Sekundärteilchen gemäss Fig. 1 entsprechenden Zahlenwerte sind in der Tabelle 5 aufgeführt.

### Tabelle 5
### Teilchengrössenverteilung (Coulter Counter)
### 50-µm-Zelle

| Teilchengrössenverteilung (µm) | Rückstand (Gew.-%) | |
|---|---|---|
| | von | bis |
| 18,35 | 0,0 | 0,0 |
| 15,14 | 0,0 | 0,0 |
| 12,50 | 0,0 | 0,0 |
| 10,30 | 0,7 | 0,95 |
| 8,50 | 0,7 | 0,95 |
| 7,00 | 1,14 | 1,55 |
| 5,80 | 1,27 | 1,72 |
| 4,80 | 3,30 | 4,47 |
| 3,95 | 5,32 | 7,20 |
| 3,26 | 8,16 | 11,05 |
| 2,69 | 13,43 | 18,17 |
| 2,22 | 16,32 | 22,09 |
| 1,83 | 24,46 | 33,09 |
| 1,51 | 32,57 | 44,07 |
| 1,25 | 42,60 | 57,63 |
| 1,03 | 59,90 | 81,00 |

Die Dispergierung der 0,05-g-Probe in 100 ml Elektrolytlösung erfolgt durch 10minütiges Rühren mit einem Flügelrührer bei 1000 tr/min. Die Teilchen über 28 µm wurden abgesiebt.

**Patentanspruch**

Verfahren zur Herstellung von sedimentationsstabilen Schaumbekämpfungsmitteln für wässerige Systeme durch Vermischen von 80 bis 99,5 Teilen eines Dimethylpolysiloxanöls mit einer Viskosität bei 25° C von 20 bis 1 000 000 cSt (0,00002 bis 1 m²/s) mit 20 bis 0,5 Teilen einer gefällten, unter Zusatz von mit Alkalilösung strahlvermahlenen Kieselsäure mit folgenden physikalisch-chemischen Kenndaten:

Oberfläche nach BET (DIN 66131) m²/g 160 ± 30; Teilchengrössenverteilungsbereich (Coulter Counter; 50-µm-Zelle; die Dispergierung der 0,05-g-Probe in 100 ml Elektrolytlösung erfolgt durch 10minütiges Rühren mit einem Flügelrührer bei 1000 tr/min, die Teilchen über 28 µm wurden abgesiebt).

| Teilchengrössenverteilung (µm) | Rückstand (Gew.-%) | |
|---|---|---|
| | von | bis |
| 18,35 | 0,0 | 0,0 |
| 15,14 | 0,0 | 0,0 |
| 12,50 | 0,0 | 0,0 |
| 10,30 | 0,7 | 0,95 |
| 8,50 | 0,7 | 0,95 |
| 7,00 | 1,14 | 1,55 |
| 5,80 | 1,27 | 1,72 |
| 4,80 | 3,30 | 4,47 |
| 3,95 | 5,32 | 7,20 |
| 3,26 | 8,16 | 11,05 |
| 2,69 | 13,43 | 18,17 |
| 2,22 | 16,32 | 22,09 |
| 1,83 | 24,46 | 33,09 |
| 1,51 | 32,57 | 44,07 |
| 1,25 | 42,60 | 57,63 |
| 1,03 | 59,90 | 81,00 |

Trocknungsverlust 2 h bei 105° C
(DIN 55921)          Gew.-% 6 ± 3
Glühverlust* 2 h bei 1000° C
(DIN 55921)          Gew.-% 5 ± 2
pH-Wert in 5%iger wässeriger
Dispersion (DIN 53200)          8 bis 10
SiO₂-Gehalt**          Gew.-% > 90

\* bezogen auf die 2 h bei 105° C getrocknete Substanz
\*\* bezogen auf die 2 h bei 1000° C geglühte Substanz

Homogenisieren mittels eines Homogenisators sowie anschliessender Erhitzung des so erhaltenen Gemisches auf eine Temperatur von 25 bis 380° C und Halten der Temperatur während eines Zeitraums von 0,1 bis 10 h.

## Revendication

Procédé pour la fabrication d'agents anti-mousse, stables à la sédimentation, pour systèmes aqueux, en mélangeant 80 à 99,5 parties en poids d'une huile de diméthylpolysiloxane ayant une viscosité, à 25° C, de 20 à 1 000 000 cSt (0,00002 à 1 m²/s) avec 20 à 0,5 parties d'un acide silicique précipité, broyé au jet avec addition d'une solution alcaline, présentant les caractéristiques physico-chimiques suivantes:
surface spécifique suivant BET (DIN 66131) m²/g 160 ± 30; champ de répartition granulométrique (compteur Coulter); cellule de 50 µm; la dispersion de l'échantillon de 0,05 g dans 100 ml de solution d'électrolyte s'effectue par une agitation de 10 min avec un agitateur à ailettes à 1000 tr/min, les particules supérieures à 28 µm ayant été éliminées par tamisage.

*(Tableau en tête de la colonne suivante)*

Homogénéisation au moyen d'un homogénéiseur ainsi que chauffage subséquent du mélange

| Répartition granulométrique (µm) | Résidu (poids %) | |
|---|---|---|
| | de | à |
| 18,35 | 0,0 | 0,0 |
| 15,14 | 0,0 | 0,0 |
| 12,50 | 0,0 | 0,0 |
| 10,30 | 0,7 | 0,95 |
| 8,50 | 0,7 | 0,95 |
| 7,00 | 1,14 | 1,55 |
| 5,80 | 1,27 | 1,72 |
| 4,80 | 3,30 | 4,47 |
| 3,95 | 5,32 | 7,20 |
| 3,26 | 8,16 | 11,05 |
| 2,69 | 13,43 | 18,17 |
| 2,22 | 16,32 | 22,09 |
| 1,83 | 24,46 | 33,09 |
| 1,51 | 32,57 | 44,07 |
| 1,25 | 42,60 | 57,63 |
| 1,03 | 59,90 | 81,00 |

Perte au séchage 2 h à 105° C
(DIN 55921)          poids % 6 ± 3
Perte au feu* 2 h à 1000° C
(DIN 55921)          poids % 5 ± 2
Valeur du pH en dispersion
aqueuse à 5% (DIN 53200)          8 à 10
Teneur en SiO₂**          poids % > 90

\* calculé sur la substance séchée pendant 2 h à 105° C
\*\* calculé sur la substance calcinée à 1000° C pendant 2 h

ainsi obtenu à une température de 25 à 380° C et maintien de cette température pendant une durée de 0,1 à 10 h.

## Claim

A process for the production of sedimentation-stable foam control means for aqueous systems by mixing from 80 to 99.5 parts of a dimethyl polysiloxane oil having a viscosity at 25° C of from 20 to 1,000,000 cSt (0.00002 to 1 m²/s) with from 20 to 0.5 parts of a precipitated silica which is jet-ground with the addition of alkali solution and has the following physical-chemical characteristic data:
surface according to BET (DIN 66131) m²/g 160 ± 30; particle size distribution range (Coulter Counter; 50 µm cell; the 0.05 g sample is dispersed in 100 ml of electrolyte solution by stirring for 10 min using a vane stirrer at 1,000 tr/min, the particles greater than 28 µm were removed by sieving).

*(Tableau en tête de la page suivante)*

Homogenising by means of a homogeniser, and by subsequently heating the mixture thus obtained to a temperature of from 25 to 380° C and maintaining the temperature over a period of from 0.1 to 10 h.

| Particle size distribution (µm) | Residue (% by weight) | |
|:---:|:---:|:---:|
| | from | to |
| 18.35 | 0.0 | 0.0 |
| 15.14 | 0.0 | 0.0 |
| 12.50 | 0.0 | 0.0 |
| 10.30 | 0.7 | 0.95 |
| 8.50 | 0.7 | 0.95 |
| 7.00 | 1.14 | 1.55 |
| 5.80 | 1.27 | 1.72 |
| 4.80 | 3.30 | 4.47 |
| 3.95 | 5.32 | 7.20 |
| 3.26 | 8.16 | 11.05 |
| 2.69 | 13.43 | 18.17 |
| 2.22 | 16.32 | 22.09 |
| 1.83 | 24.46 | 33.09 |
| 1.51 | 32.57 | 44.07 |
| 1.25 | 42.60 | 57.63 |
| 1.03 | 59.90 | 81.00 |

Drying loss 2 h at 105° C
  (DIN 55921)       % by weight $6 \pm 3$
Annealing loss* 2 h at 1,000° C
  (DIN 55921)       % by weight $5 \pm 2$
pH value in 5% aqueous
  dispersion (DIN 53200)     8 to 10
$SiO_2$ content**     % by weight $> 90$

 * based on the substance dried for 2 h at 105° C
** based on the substance annealed for 2 h at 1,000° C

Fig. 1